# EUROPEAN PATENT SPECIFICATION

(11) **EP 4 354 608 B1**
(45) Date of publication and mention of the grant of the patent: **25.11.2026**
(21) Application number: 22894530.9
(22) Date of filing: 13.10.2022
(51) Int. Cl.: H01M 50/15, H01M 50/528, H01M 50/531

(54) **BATTERY CELL, BATTERY AND POWER CONSUMING DEVICE**
BATTERIEZELLE, BATTERIE UND STROMVERBRAUCHENDE VORRICHTUNG
ÉLÉMENT DE BATTERIE, BATTERIE ET DISPOSITIF CONSOMMATEUR D'ÉNERGIE

(30) Priority: 22.11.2021 CN 202122875224 U
(43) Date of publication of application: 17.04.2024
(73) Proprietor: Contemporary Amperex Technology (Hong Kong) Limited, Central, Central And Western District (HK)
(72) Inventor: LI, Zhen, Ningde, Fujian 352100 (CN)
(74) Representative: Gong, Jinping
(86) International application number: PCT/CN2022/125197
(87) International publication number: WO 2023/087992

(56) References cited:
- EP-A1- 4 148 896
- WO-A1-2020/071718
- CN-A- 101 552 330
- CN-A- 102 222 806
- CN-U- 208 336 334
- CN-U- 209 183 657
- CN-U- 215 266 481
- CN-U- 216 213 743
- JP-A- 2009 037 833
- JP-A- 2010 027 436

## Description

The present application claims the priority of Chinese patent application no. 202122875224.5, entitled "BATTERY CELL, BATTERY, AND POWER CONSUMING DEVICE" and filed on November 22, 2021.

### Technical Field

Embodiments of the present application relate to the technical field of battery manufacturing, and in particular to a battery cell, a battery, and a power consuming device.

### Background Art

A battery cell includes a housing, an end cap and an electrode assembly, wherein the end cap and the housing are fitted together in a covering manner to form a cavity for accommodating the electrode assembly. The electrode assembly includes a tab, the end cap includes an electrode terminal, and the electrode terminal and the tab are welded together so as to derive current.

In the related art, many welding defects may be caused easily when the electrode terminal and the tab are welded to each other, which affects a normal operation of the battery cell.

EP4148896A1 descripes a battery cell design incorporates a reinforcing part in the end cap to strengthen the connection with the electrode assembly tabs and improve service life, along with efficient electrolyte flow channels, addressing the weakness of existing connections and injection processes.

WO2020/071718A1 describes a secondary battery design with protruding uncoated electrode portions and a specialized can connection addresses the issues of resistance and heat dissipation, achieving improved performance by allowing direct connection and uniform welding.

### Summary of the Invention

### Technical Problem

**In** view of the above problem, the embodiments of the present application provide a battery cell, a battery, and a power consuming device, which can reduce the possibility of welding defects produced during welding arc striking and welding arc extinguishing, and ensure that even if the welding defects are produced at the positions of welding arc striking and welding arc extinguishing, the airtightness of the battery cell may not be affected, such that a normal operation of the battery cell may not be affected.

### Solutions to Problems

### Technical Solutions

According to a first aspect of the embodiments of the present application, a battery cell is provided. The battery cell includes an end cap and a welding portion. The end cap has a first face facing away from the inside of the battery cell, the end cap is provided with a recess recessed relative to the first face, and an arc striking portion is arranged between a bottom wall of the recess and the first face. The arc striking portion is a slope, the arc striking portion has a first end and a second end opposite to each other, the first end is connected to the bottom wall of the recess, the second end is connected to the first face, and the thickness of the first end is less than that of the second end. The welding portion is configured to connect the end cap to a tab of the battery cell, a central portion of the welding portion is located on the bottom wall of the recess, and an end portion of the welding portion is located on the arc striking portion or the first face. The second end of the arc striking portion is provided with a bulged portion, the bulged portion protrudes from the first face, and at least one of the starting end and the ending end of the welding portion is located on the bulged portion.

In some embodiments, an angle of inclination of the slope relative to the bottom wall of the recess is greater than or equal to 15 degrees and less than or equal to 45 degrees.

Setting the angle of inclination of the slope relative to the bottom wall of the recess to be greater than or equal to 15 degrees can prevent the slope from being set too long due to an excessively small angle of inclination of the slope, which affects the over-current area or reduces the strength of the end cap. Setting the angle of inclination of the slope relative to the bottom wall of the recess to be less than or equal to 45 degrees can prevent the slope from being set too short due to an excessively large angle of inclination of the slope, which makes it impossible to play a role of arc striking transition.

In some embodiments, the height of the slope is greater than or equal to 0.4 mm in a thickness direction of the end cap.

Setting the height of the slope to be greater than or equal to 0.4 mm can effectively reduce the risk of welding penetration when the end portion of the welding portion is located at the second end of the arc striking portion.

In some embodiments, two ends of the recess are both provided with arc striking portions, a starting end of the welding portion is located on the arc striking portion at one end of the recess or the first face, and an ending end of the welding portion is located on the arc striking portion at the other end of the recess or the first face.

Two ends of the recess are both provided with arc striking portions, and the arc striking portions at the two ends may be used as intermediate bridges between the recess and the first face, allowing for a gradual transition between each of the two ends of the recess and the first face, thereby facilitating leading of the two end portions of the welding portion, at the two ends of the recess, to the arc striking portion having a larger thickness or the first face.

With the above solution, the end portions of the welding portion can all be led onto the bulged portion having a larger thickness, which can further avoid welding defects and also reduce the effect on the airtightness of the battery.

In some embodiments, an extension of the welding portion on the bulged portion is greater than 2 mm.

With the above solution, it can effectively ensure that parts probably producing welding defects during welding arc striking and/or welding arc extinguishing are all left on the thicker bulged portion, which can further avoid welding defects and also reduce the effect on the airtightness of the battery.

In some embodiments, the first end of the arc striking portion and the bottom wall of the recess are in a smooth transition.

With the above solution, there is no clear boundary between the first end of the arc striking portion and the bottom wall of the recess, so that it is convenient to lead the welding portion to the arc striking portion or the first face via the recess.

In some embodiments, the side of the arc striking portion facing away from the inside of the battery cell is planar or curved.

The side of the arc striking portion facing away from the inside of the battery cell may be planar or curved, and is set in a diversified manner. In addition, setting the side of the arc striking portion facing away from the inside of the battery cell to be planar or curved can play a role of arc striking transition.

In some embodiments, the recess is arc-shaped.

With the above solution, a larger weld mark area can be acquired to facilitate reliable welding of the end cap to the tab.

In some embodiments, the battery cell includes a plurality of recesses arranged at intervals in a circumferential direction of the end cap.

With the above solution, the weld mark area of the end cap and the tab can be increased while arc striking transition is achieved, so that the strength of welding of the end cap to the tab can be improved.

According to a second aspect of the embodiments of the present application, a battery is provided, including a battery cell as described in the first aspect.

According to a third aspect of the embodiments of the present application, a power consuming device is provided, including a battery as described in the second aspect. The battery is configured to supply electric energy to the power consuming device.

The aforementioned description is merely an overview of the technical solutions of the embodiments of the present application. In order to more clearly understand the technical means of the embodiments of the present application to implement the technical means according to the content of the description, and in order to make the above and other objectives, features and advantages of the embodiments of the present application more obvious and understandable, specific implementations of the present application are illustratively described below.

### Beneficial Effects of the Invention

### Beneficial Effects

With the above solutions, the end portion of the welding portion may be arranged on the arc striking portion having a larger thickness or the first face, but not on the recess having a smaller thickness, so that the possibility of welding defects produced during welding arc striking and welding arc extinguishing can be reduced. Besides, since welding arc striking and welding arc extinguishing are carried out in a position having a larger thickness, even if welding defects are produced at the positions of welding arc striking and welding arc extinguishing, the airtightness of the battery cell may not be affected, such that a normal operation of the battery cell may not be affected.

### Brief Description of the Drawings

### Description of the Drawings

In order to more clearly illustrate the technical solutions in the embodiments of the present application, the drawings to be used in the description of the embodiments will be described briefly below. Obviously, the drawings in the following description are merely some embodiments of the present application. For those of ordinary skill in the art, other drawings can also be obtained according to these drawings without creative efforts.
FIG. 1 is a schematic structure diagram of a vehicle according to an embodiment of the present application;
FIG. 2 is a schematic structure diagram of a battery according to an embodiment of the present application;
FIG. 3 is an exploded schematic structure diagram of a battery cell according to an embodiment of the present application;
FIG. 4 is a schematic structure diagram of a battery cell according to an embodiment of the present application;
FIG. 5 is a schematic structure diagram of an end cap according to an embodiment of the present application, and FIG. 5 shows a part of a welding portion;
FIG. 6 is a schematic top view of the structure of an end cap according to an embodiment of the present application;
FIG. 7 is a first cross-sectional view of FIG. 6 taken along line A-A;
FIG. 8 is a second cross-sectional view of FIG. 6 taken along line A-A; and
FIG. 9 is a third cross-sectional view of FIG. 6 taken along line A-A.

Description of reference signs:
A - vehicle, 1 - battery, 11- case, 11a - first case portion, 11b - second case portion, 11c - inner space, 2 - controller, 3 - motor,
12 - battery cell, 121 - end cap, 121a - electrode terminal, 121b - first face, 121c - recess, 121d - arc striking portion, 121e - bulged portion, 122 - housing, 123 - electrode assembly, 123a - tab, 124 - welding portion, L - extension.

### Embodiments

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Apparently, the embodiments described are some of, rather than all of, the embodiments of the present application.

Unless otherwise defined, all technical and scientific terms used herein have the same meanings as those commonly understood by those skilled in the art to which the present application belongs. The terms used in the description of the present application are merely for the purpose of describing specific embodiments, and are not intended to limit the present application.

The terms "include/comprise" and "have" in the description, claims and drawings of the present application and any variations thereof are intended to cover and not exclude other contents. The word "a/an" or "one" does not exclude existence of multiple.

The phrase "embodiment" mentioned herein means that the specific features, structures, or characteristics described in conjunction with the embodiment can be encompassed in at least one embodiment of the present application. The phrase "embodiment" in various places in the description does not necessarily refer to the same embodiment, nor is it an independent or alternative embodiment exclusive of other embodiments. Those skilled in the art understand explicitly or implicitly that the embodiment described herein may be combined with another embodiment.

The term "and/or" herein is merely the description of an associated relationship of associated objects, and indicates that three relationships may exist. For example, A and/or B can indicate only A exists, both A and B exist, and only B exists. In addition, the character "/" herein generally indicates an "or" relationship between the associated objects.

The orientation terms in the following description all indicate directions shown in the accompanying drawings, and do not limit specific structures of a battery cell, a battery, and a power consuming device in the present application. For example, in the description of the present application, the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and for simplicity of description, rather than indicating or implying that the device or element referred to must have a particular orientation or be constructed and operated in a particular orientation, and thus cannot be construed as a limitation on the present application.

In addition, expressions indicating directions, such as an X-direction, a Y-direction and a Z-direction, which are used to describe operations and configurations of various members of the battery cell, the battery, and the power consuming device of the embodiments are not absolute but relative, and although the indications are appropriate when various members of a battery pack are in positions shown in the figures, when the positions are changed, the directions should be interpreted differently to correspond to the changes.

In addition, the terms "first", "second", etc. in the description, claims, or the accompanying drawings of the present application are used for distinguishing different objects, instead of describing a specific order, and thus can explicitly or implicitly include one or more features.

In the description of the present application, unless otherwise stated, "a plurality of" means two or more (including two), and similarly, "a plurality of groups" means two or more groups (including two groups).

In the description of the present application, it should be noted that unless otherwise explicitly specified and defined, the terms "mounting", "connected", and "connection" should be understood in a broad sense. For example, "connected" or "connection" of mechanical structures can be a physical connection. For example, the physical connection can be a fixed connection, by means of, for example, a fixing member, such as a screw, a bolt, etc.; or the physical connection can be a detachable connection, for example, a mutual snap-fit or bayonet connection; or the physical connection can be an integral connection, for example, welding, bonding, or integral molding. In addition to a physical connection, "connected" or "connection" of circuit structures can be an electrical connection or a signal connection. For example, it can be a direct connection, that is, the physical connection, or an indirect connection by means of at least one intermediate element, as long as the circuits are connected. It can further be internal communication between two elements. In addition to a signal connection by means of a circuit, the signal connection can be a signal connection by means of a media medium, such as radio waves. For those of ordinary skill in the art, the specific meanings of the terms in the present application can be construed according to specific circumstances.

Lithium-ion batteries have been widely used in the fields of consumer electronics, new energy vehicles, etc., because of their characteristics such as a high energy density, a low selfdischarge and a high capacity retention ratio. A battery cell in the lithium-ion battery includes a housing, an end cap and an electrode assembly, wherein the end cap and the housing are fitted together in a covering manner to form a cavity for accommodating the electrode assembly. The end cap includes an electrode terminal, the end cap has a terminal hole, and the electrode terminal passes through the terminal hole and is hermetically assembled with the end cap. The electrode assembly includes a tab, and the tab is electrically connected to the electrode terminal so as to derive current from the electrode assembly.

For the electrical connection between the tab and the electrode terminal, in the related art, the tab and an adapter are first welded by means of laser welding, then the end cap and the housing are fitted together in a covering manner, and after that, the adapter and the electrode terminal are welded together. In this method, it is necessary to use the adapter as an intermediate bridge, leading to a complex structure of the battery cell and increasing the manufacturing cost of the battery cell. In addition, the end cap and the housing have not been fitted together in a covering manner when the tab and the adapter are welded to each other, so that debris produced during welding is likely to fall into the housing, causing damage to the electrode assembly and affecting the safety of the battery. In order to solve the above problem, in the related art, the end cap and the electrode terminal are electrically connected together subsequently, and then the end cap and the tab are welded outside the battery cell to realize the electrical connection between the electrode terminal and the tab.

The applicant found that in the related art, the electrode terminal and the tab are electrically connected by means of external welding, which can reduce the risk of debris produced by welding falling into the housing to a certain extent, but makes it impossible to directly observe the welding of the end cap to the tab during external welding. Moreover, a motor-driven galvanometer scanner moves slowly before reaching a required welding speed during welding arc striking, which makes a welding area between the end cap and the tab absorb high laser energy per unit area at a welding starting end, causing a risk of welding penetration. In addition, due to a high cooling speed of laser welding, a keyhole is formed easily during welding arc extinguishing. The welding area is prone to cratering or cracking at a weld ending end if there is not enough molten metal to fill the keyhole. It can be seen that in the related art, the electrode terminal and the tab are electrically connected by means of external welding, which may cause welding defects such as welding penetration, pits and cracks, thus cannot guarantee the airtightness of the battery and affects a normal operation of the battery. Therefore, it is necessary to further improve the structure of the battery cell, so as to realize the electrical connection between the electrode terminal and the tab without affecting the airtightness and normal operation of the battery.

Accordingly, an embodiment of the present application provides a battery cell. The battery cell includes an end cap and a welding portion. The end cap has a first face facing away from the inside of the battery cell. The end cap is provided with a recess recessed relative to the first face. An arc striking portion is arranged between the recess and the first face. The arc striking portion is a slope. The arc striking portion has a first end connected to a bottom wall of the recess and a second end connected to the first face, and the thickness of the first end is less than that of the second end. Since the recess is recessed relative to the first face, the arc striking portion is located between the bottom wall of the recess and the first face, and the arc striking portion is a slope, the thickness of the end cap at the bottom wall of the recess is less than those at the arc striking portion and the first face in a thickness direction. A central portion of the welding portion is located on the bottom wall of the recess, and an end portion of the welding portion is located on the arc striking portion or the first face, so that the position where the central portion of the welding portion is located has a smaller thickness, and the position where the end portion of the welding portion is located has a larger thickness. **In** this way, in one aspect, the possibility of welding defects produced during welding arc striking and welding arc extinguishing can be reduced, and in another aspect, even if welding defects are produced during welding arc striking and welding arc extinguishing, the welding defects may fall on the arc striking portion having a larger thickness or the first face, but not on the recess having a smaller thickness, which thus may not affect the airtightness of the battery, such that the normal operation of the battery may not be affected.

A battery in the embodiments of the present application refers to a single physical module including one or more battery cells to provide a high voltage and capacity. For example, the battery mentioned in the present application may include a battery module, a battery pack, etc. In addition, the battery cell mentioned in the present application may be a cylindrical battery cell or a square battery cell or other battery cells in various shapes. The battery generally includes a battery case for packaging one or more battery cells. The battery case can prevent liquid or other foreign matters from affecting charging or discharging of the battery cell(s).

The power consuming device may be a vehicle, a mobile phone, a portable apparatus, a notebook computer, a ship, a spacecraft, an electric toy, an electric tool, etc. The vehicle may be a fuel vehicle, a gas vehicle or a new energy vehicle. The new energy vehicle may be a battery electric vehicle, a hybrid vehicle, an extended range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

For ease of description, an example in which a power consuming device refers to a vehicle is used for description in the following embodiments.

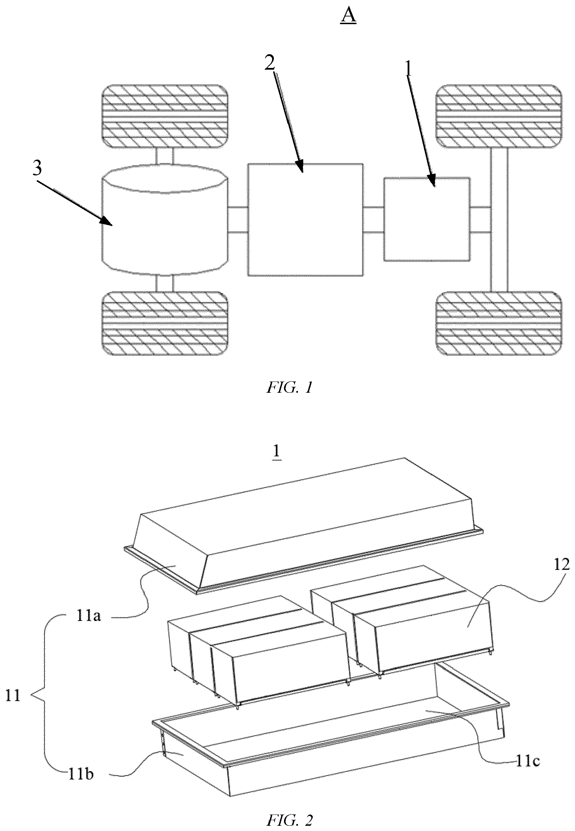

Referring to FIG. 1, FIG. 1 is a schematic structure diagram of a vehicle A according to some embodiments of the present application.

As shown in FIG. 1, the vehicle A may be a fuel vehicle, a gas vehicle or a new energy vehicle, and the new energy vehicle may be a battery electric vehicle, a hybrid electric vehicle, an extended range vehicle, etc. The vehicle A includes a battery 1, a controller 2, and a motor 3. The battery 1 is used to supply power to the controller 2 and the motor 3 as a power source for operating and driving the vehicle A. For example, the battery 1 is used to meet the working power consuming demands of the vehicle A during startup, navigation and operation. For example, the battery 1 supplies power to the controller 2, the controller 2 controls the battery 1 to supply power to the motor 3, and the motor 3 receives and uses the power from the battery 1 as a driving power source for the vehicle A, instead of or partially instead of fuel or natural gas, to provide driving power for the vehicle A.

Referring to FIG. 2, FIG. 2 is a schematic exploded diagram of the battery 1 according to some embodiments of the present application.

As shown in FIG. 2, the battery 1 includes a case 11 and a battery cell 12. The case 11 is configured to accommodate the battery cell 12, and the case 11 may be of various structures. In some embodiments, the case 11 may include a first case portion 11a and a second case portion 11b. The first case portion 11a and the second case portion 11b are fitted to each other in a covering manner, and the first case portion 11a and the second case portion 11b jointly define an inner space 11c for accommodating the battery cell 12. The second case portion 11b may be of a hollow structure with one end opened, the first case portion 11a is of a plate-like structure, and the first case portion 11a covers the open side of the second case portion 11b to form the case 11 having the inner space 11c. The first case portion 11a and the second case portion 11b each may also be of a hollow structure with one side opened, and the open side of the first case portion 11a covers the open side of the second case portion 11b to form the case 11 having the inner space 11c. Of course, the first case portion 11a and the second case portion 11b may have various shapes such as a cylinder and a cuboid.

Assuming that the first case portion 11a covers the top of the second case portion 11b, the first case portion 11a may also be referred to as an upper case cover, and the second case portion 11b may also be referred to as a lower case.

In FIG. 2, a plurality of battery cells 12 are provided. The plurality of battery cells 12 may be connected in series, parallel, or series-parallel, where being connected in series-parallel means a combination of series and parallel connections of the plurality of battery cells 12. The plurality of battery cells 12 may be directly connected to each other in series or in parallel or in series-parallel, and then a unit composed of the plurality of battery cells 12 is received in the case 11. Of course, it is also possible that a plurality of battery cells 12 are first connected in series or in parallel or in series-parallel to form a battery module, and a plurality of battery modules are then connected in series or in parallel or in series-parallel to form a unit and are accommodated in the case 11. In some embodiments, a plurality of battery cells 12 are provided, and the plurality of battery cells 12 are connected in series or in parallel or in series-parallel to form a battery module. A plurality of battery modules are connected in series or in parallel or in series-parallel to form a unit and are accommodated in the case 11.

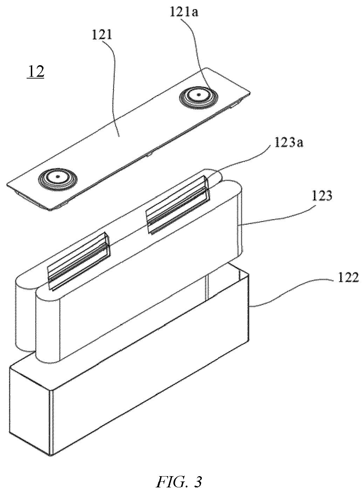

Referring to FIG. 3, FIG. 3 is a schematic structure diagram of the battery cell 12 according to some embodiments of the present application.

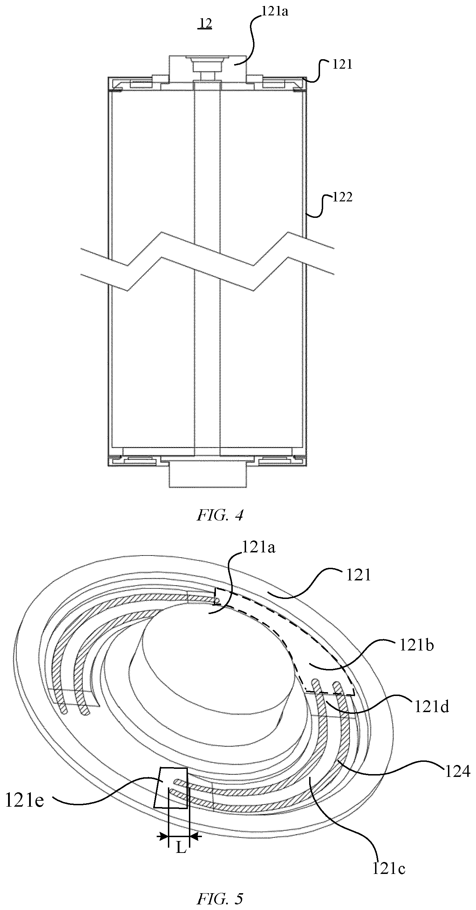

FIG. 3 is an exploded schematic structure diagram of the battery cell 12 according to some embodiments of the present application; and FIG. 4 is a schematic structure diagram of the battery cell according to some embodiments of the present application. The battery cell 12 refers to a minimum unit that constitutes a battery. As shown in FIG. 3 and FIG. 4, the battery cell 12 includes an end cap 121, a housing 122, and an electrode assembly 123.

The end cap 121 refers to a component that closes an opening of the housing 122 so as to isolate an internal environment of the battery cell 12 from an external environment. Without limitation, the end cap 121 may be shaped to adapt to the shape of the housing 122 so as to fit with the housing 122. Optionally, the end cap 121 may be made of a material (for example, an aluminum alloy) with a certain hardness and strength. In this way, the end cap 121 is less prone to deformation when subjected to compression and collision, so that the battery cell 12 may have a higher structural strength and the safety performance can also be improved. Functional components, such as electrode terminals 121a, may be provided on the end cap 121. The electrode terminals 121a may be configured to be electrically connected to the electrode assembly 123, so as to output or input electric energy of the battery cell 12. In some embodiments, the end cap 121 may be further provided with a pressure relief mechanism configured to release an internal pressure when the internal pressure or temperature of the battery cell 12 reaches a threshold. The end cap 121 may be made of various materials, such as copper, iron, aluminum, stainless steel, an aluminum alloy and plastic, which is not specifically limited in embodiments of the present application. In some embodiments, an insulating member may also be provided on an inner side of the end cap 121, and the insulating member may be used to isolate electrically connected components in the housing 122 from the end cap 121 to reduce the risk of short circuit. Illustratively, the insulating member may be made of plastic, rubber, etc.

The housing 122 is an assembly for matching the end cap 121 to form the internal environment of the battery cell 12. The formed internal environment may be used to receive the electrode assembly 123, an electrolyte solution (not shown in the figures) and other components. The housing 122 and the end cap 121 may be independent components, an opening may be provided on the housing 122, and the end cap 121 may close the opening, such that an internal environment of the battery cell 12 is formed. Without limitation, the end cap 121 and the housing 122 may also be integrated with each other. Specifically, the end cap 121 and the housing 122 may form a common connection face before other components are inserted into the housing. When the interior of the housing 122 needs to be packaged, the end cap 121 then covers the housing 122. The housing 122 may have various shapes and various sizes, for example, in the form of a cuboid, a cylinder, a hexagonal prism, etc. Specifically, the shape of the housing 122 may be determined depending on the specific shape and size of the electrode assembly 123. The housing 122 may be made of various materials, such as copper, iron, aluminum, stainless steel, an aluminum alloy, plastic, which is not specifically limited in the embodiments of the present application.

The electrode assembly 123 is a component where an electrochemical reaction occurs in the battery cell 12. The housing 122 may include one or more electrode assemblies 123 therein. The electrode assembly 123 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 123, and the portions of the positive electrode plate and the negative electrode plate that have no active material each form a tab 123a. A positive electrode tab and a negative electrode tab may be both located at one end of the main body portion or respectively at two ends of the main body portion. During the charge/discharge process of the battery, a positive electrode active material and a negative electrode active material react with the electrolyte solution, and the tabs 123a are connected to the electrode terminals 121a to form a current loop.

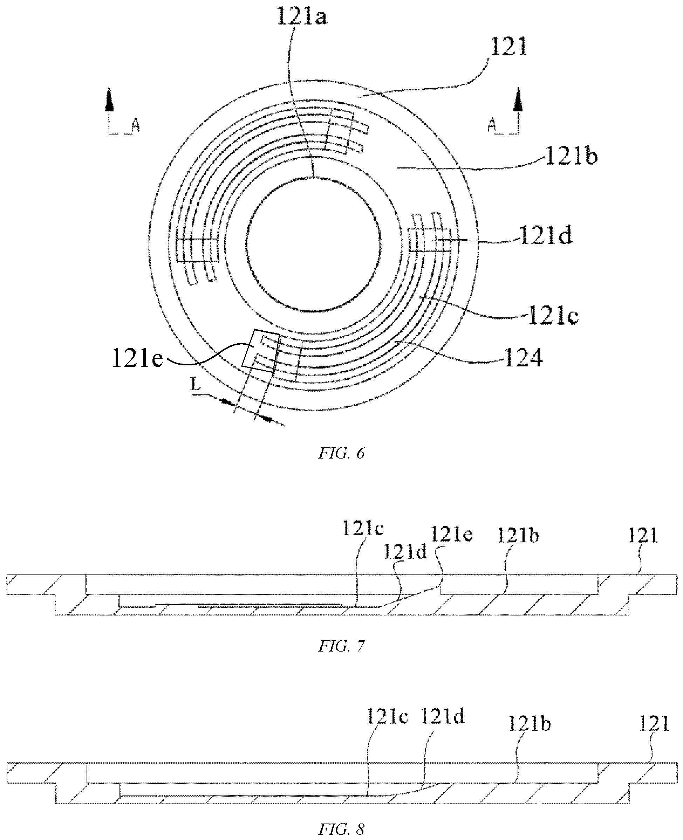

In some embodiments, as shown in FIG. 5 and FIG. 6, the battery cell 12 includes an end cap 121 and a welding portion 124. The end cap 121 has a first face 121b facing away from the inside of the battery cell 12, the end cap 121 is provided with a recess 121c recessed relative to the first face 121b, and an arc striking portion 121d is arranged between a bottom wall of the recess 121c and the first face 121b. The arc striking portion 121d is a slope, the arc striking portion 121d has a first end and a second end opposite to each other, the first end is connected to the bottom wall of the recess 121c, the second end is connected to the first face 121b, and the thickness of the first end is less than that of the second end. The welding portion 124 is configured to connect the end cap 121 to a tab 123a of the battery cell 12, a central portion of the welding portion 124 is located on the bottom wall of the recess 121c, and an end portion of the welding portion 124 is located on the arc striking portion 121d or the first face 121b.

The battery cell 12 involved in the embodiments of the present application may be a square battery 1, a cylindrical battery 1, etc. The battery cell 12 in the embodiments of the present application will be described below in detail by taking the cylindrical battery 1 as an example.

For the cylindrical battery 1, the end cap 121 may be circular. In the present application, the end cap 121 is electrically connected to an electrode terminal 121a, and the electrode terminal 121a and the tab 123a may be electrically connected by welding the end cap 121 and the tab 123a outside the battery cell 12. The end cap 121 has the first face 121b and a second face opposite to each other, and the first face 121b is farther away from the inside of the battery cell 12 than the second face. In order to ensure the strength of the end cap 121, the end cap 121 has a certain thickness. However, it is necessary to weld the end cap 121 to the tab 123a when the end cap 121 and the tab 123a are welded, so the thickness of the end cap 121 should not be too large, otherwise the welding is difficult and the welding efficiency is low. Accordingly, in the present application, the end cap 121 is provided with the recess 121c recessed relative to the first face 121b, and an area where the bottom wall of the recess 121c is located is used as a part of the welding portion 124 to weld the end cap 121 and the tab 123a, which can reduce the welding difficulty and improve the welding efficiency without excessively reducing the strength of the end cap 121.

In the case that the thickness of the end cap 121 is constant, the greater the depth of the recess 121c is, the smaller the thickness of a welding area where the recess 121c is located is, and the more likely it is to cause the defect of welding penetration. Therefore, the depth of the recess 121c should not be too large. In this embodiment, the depth of the recess 121c may be set according to the thickness of the end cap 121. For example, the depth of the recess 121c may be one third of the thickness of the end cap 121.

The recess 121c has a bottom wall, the bottom wall of the recess 121c has two opposite end portions in its extension direction, and the arc striking portion 121d may be located between the bottom wall of the recess 121c and the first face 121b as a recess wall of the recess 121c. In some other embodiments, the arc striking portion 121d may be a separate component connected to the bottom wall of the recess 121c, and the arc striking portion 121d and the bottom wall of the recess 121c may be connected by means of welding, bonding, etc. The second end of the arc striking portion 121d may be connected to the first face 121b, or may keep a certain distance away from the first face 121b and may be connected to the first face by other walls of the recess 121c or other components. The thickness of the first end of the arc striking portion 121d refers to the dimension of the first end of the arc striking portion 121d in the thickness direction of the end cap 121, and the thickness of the second end of the arc striking portion 121d refers to the dimension of the second end of the arc striking portion 121d in the thickness direction of the end cap 121. The arc striking portion 121d is a slope. The arc striking portion 121d has the first end connected to the recess 121c and the second end connected to the first face 121b. The arc striking portion 121d has a smaller thickness at the first end than at the second end. Thus, the arc striking portion 121d may serve as an intermediate bridge between the recess 121c and the first face 121b, allowing for a gradual transition between the recess 121c and the first face 121b.

The welding portion 124 refers to a part of the battery cell 12 for welding the end cap 121 and the tab 123a together. The end portion of the welding portion 124 refers to a part where welding arc striking and welding arc extinguishing occur, and the central portion of the welding portion 124 is a part of the welding portion 124 other than the end portion. The arc striking portion 121d is located between the recess 121c and the first face 121b, and the welding portion 124 extends from the bottom wall of the recess 121c to the arc striking portion 121d or the first face 121b, so that the central portion of the welding portion 124 may be located on the bottom wall of the recess 121c, and a welding end point corresponding to welding arc extinguishing may be left on the arc striking portion 121d or the first face 121b; and the welding portion 124 extends from the arc striking portion 121d or the first face 121b to the bottom wall of the recess 121c, so that a welding start point corresponding to welding arc striking may be left on the arc striking portion 121d or the first face 121b, and the central portion of the welding portion 124 may be located on the bottom wall of the recess 121c.

The end cap 121 has a smaller thickness at the bottom wall of the recess 121c than those at the arc striking portion 121d and the first face 121b in the thickness direction. The central portion of the welding portion 124 is located on the bottom wall of the recess 121c, so that the position where the central portion of the welding portion 124 is located has a smaller thickness, which helps to improve the welding efficiency. The end portion of the welding portion 124 is located on the arc striking portion 121d or the first face 121b, so that the position where the end portion of the welding portion 124 is located has a larger thickness. In one aspect, the possibility of welding defects produced during welding arc striking and welding arc extinguishing can be reduced, and in another aspect, even if welding defects are produced during welding arc striking and welding arc extinguishing, the welding defects may fall on the arc striking portion 121d having a larger thickness or the first face 121b, but not on the bottom wall of the recess 121c having a smaller thickness, which thus may not affect the airtightness of the battery cell 12, such that the normal operation of the battery cell 12 may not be affected.

In an embodiment of the present application, the recess 121c is recessed relative to the first face 121b, the arc striking portion 121d is arranged between the recess 121c and the first face 121b, the arc striking portion 121d is a slope, the first end of the arc striking portion 121d having a smaller thickness is connected to the recess 121c, and the second end of the arc striking portion 121d having a larger thickness is connected to the first face 121b. The central portion of the welding portion 124 is located in the recess 121c, and the end portion of the welding portion 124 is located on the arc striking portion 121d or the first face 121b. It can be seen that in the present application, the end portion of the welding portion 124 is arranged on the arc striking portion 121d having a larger thickness or the first face 121b, but not in the recess 121c having a smaller thickness. In this way, the possibility of welding defects produced during welding arc striking and welding arc extinguishing can be reduced. Besides, since welding arc striking and welding arc extinguishing are carried out in a position having a larger thickness, even if welding defects are produced at the positions of welding arc striking and welding arc extinguishing, the airtightness of the battery cell 12 may not be affected, such that the normal operation of the battery cell 12 may not be affected.

In some embodiments, an angle of inclination of the slope relative to the bottom wall of the recess 121c is greater than or equal to 15 degrees and less than or equal to 45 degrees.

The angle of inclination of the slope relative to the bottom wall of the recess 121c refers to an acute angle between a slope face of the slope and the bottom wall of the recess 121c. In the case that the size of the end cap 121 remains unchanged, the smaller the angle of inclination is, the longer the slope may be, which may either reduce the welding area corresponding to the recess 121c and affect the over-current area, or reduce the dimension of the first face 121b and the strength of the end cap 121; however, the greater the angle of inclination is, the shorter and steeper the slope may be, which fails to play a favorable transition role, i.e., fails to play a role of arc striking transition. Therefore, it is necessary to limit the angle of inclination of the slope. In the present application, the angle of inclination may be any degree between 15 and 45 degrees. For example, the angle of inclination of the slope relative to the bottom wall of the recess 121c may be 15 degrees, 20 degrees, 30 degrees, 45 degrees, etc.

It can be understood that the angle of inclination of the slope relative to the bottom wall of the recess 121c may be adaptively adjusted according to the size of the end cap 121, the depth of the recess 121c, etc. For example, the degree of inclination of the slope relative to the bottom wall of the recess 121c may be set slightly smaller when the end cap 121 is large.

Setting the angle of inclination of the slope relative to the bottom wall of the recess 121c to be greater than or equal to 15 degrees can prevent the slope from being set too long due to an excessively small angle of inclination of the slope, which can affect the over-current area or reduce the strength of the end cap 121. Setting the angle of inclination of the slope relative to the bottom wall of the recess 121c to be less than or equal to 45 degrees can prevent the slope from being set too short due to an excessively large angle of inclination of the slope, which makes it impossible to play a role of arc striking transition.

In some embodiments, the height of the slope is greater than or equal to 0.4 mm in the thickness direction of the end cap 121.

The height of the slope refers to the distance between an end portion of the slope close to the first face 121b and the bottom wall of the recess 121c, or the height of the slope refers to the distance between the second end of the arc striking portion 121d and the bottom wall of the recess 121c.

Setting the height of the slope to be greater than or equal to 0.4 mm can effectively reduce the risk of welding penetration when the end portion of the welding portion 124 is located at the second end of the arc striking portion 121d.

It should be noted herein that the embodiments of the present application only disclose a minimum height of 0.4 mm of the slope, but do not limit the maximum height of the slope. In the present application, the highest point of the slope, namely, the second end of the arc striking portion 121d, may be flush with the first face 121b or protrude from the first face 121b in the thickness direction of the end cap 121. The end portion of the welding portion 124 may be located at the second end of the arc striking portion 121d or located on the first face 121b when the second end of the arc striking portion 121d is flush with the first face 121b in the thickness direction of the end cap 121. The end portion of the welding portion 124 may be located at the second end of the arc striking portion 121d when the second end of the arc striking portion 121d protrudes from the first face 121b in the thickness direction of the end cap 121.

In some embodiments, as shown in FIG. 5 and FIG. 6, two ends of the recess 121c are provided with the arc striking portions 121d, a starting end of the welding portion 124 is located on the arc striking portion 121d at one end of the recess 121c or the first face 121b, and an ending end of the welding portion 124 is located on the arc striking portion 121d at the other end of the recess 121c or the first face 121b.

The structures of the arc striking portions 121d arranged at the two ends of the recess 121c may be the same or slightly different. For example, the height of the arc striking portion 121d at one end of the recess 121c is greater than the height of the arc striking portion 121d at the other end of the recess 121c.

The starting end of the welding portion 124 corresponds to a part where welding arc striking occurs, and the ending end of the welding portion 124 corresponds to a part where welding arc extinguishing occurs. One welding portion 124 includes one starting end and one ending end. In the embodiments of the present application, the starting end and the ending end of the welding portion 124 may be both located on the arc striking portion 121d, or both located on the first face 121b, or one located on the arc striking portion 121d and the other located on the first face 121b. Exemplarily, the starting end and the ending end of the welding portion 124 may be located on the arc striking portions 121d at the two ends of the recess 121c respectively, or on the first faces 121b at the two ends of the recess 121c respectively, or one on the arc striking portion 121d at one end of the recess 121c and the other on the first face 121b at the other end of the recess 121c.

The two ends of the recess 121c are provided with the arc striking portions 121d, and the arc striking portions 121d at the two ends may serve as intermediate bridges between the recess 121c and the first face 121b respectively, allowing for a gradual transition between each of the two ends of the recess 121c and the first face 121b, thereby facilitating leading of the two end portions of the welding portions 124, at the two ends of the recess 121c, to the arc striking portion 121d having a larger thickness or the first face 121b.

It should be noted herein that the arc striking portion 121d may also be located between the bottom wall of the recess 121c and the first face 121b as a recess wall of the recess 121c. When the arc striking portion 121d is located between the end portion of the recess 121c and the first face 121b, as in the above embodiment, both of the two ends of the recess 121c may be provided with the arc striking portions 121d, the starting end of the welding portion 124 is located on the arc striking portion 121d at one end of the recess 121c or the first face 121b, and the ending end of the welding portion 124 is located on the arc striking portion 121d at the other end of the recess 121c or the first face 121b. However, when the arc striking portion 121d is located between the bottom wall of the recess 121c and the first face 121b as the recess wall of the recess 121c, if positions where the two recess walls of the recess 121c are located are defined as two sides of the recess 121c, both of the two sides of the recess 121c may be provided with the arc striking portions 121d, the starting end of the welding portion 124 is located on the arc striking portion 121d on one side of the recess 121c or the first face 121b, and the ending end of the welding portion 124 is located on the arc striking portion 121d on the other side of the recess 121c or the first face 121b.

The two sides of the recess 121c are both provided with the arc striking portions 121d, and the arc striking portions 121d on the two sides may serve as intermediate bridges between the bottom wall of the recess 121c and the first face 121b, allowing for a gradual transition between each of the two sides of the recess 121c and the first face 121b, thereby facilitating leading of the two end portions of the welding portion 124, on the two sides of the recess 121c, to the arc striking portion 121d having a larger thickness or the first face 121b.

In some embodiments, as shown in FIG. 7, the second end of the arc striking portion 121d is provided with a bulged portion 121e, the bulged portion 121e protrudes from the first face 121b, and at least one of the starting end and the ending end of the welding portion 124 is located on the bulged portion 121e.

The bulged portion 121e may be a part of the second end of the arc striking portion 121d extending towards the first face 121b and above the first face 121b. The bulged portion 121e is farther away from the tab 123a than the first face 121b in the thickness direction of the end cap 121. Welding defects will be less likely to occur if the end portion of the welding portion 124 is located on the bulged portion 121e.

When the two ends or the two sides of the recess 121c are provided with the arc striking portion 121d, and only the second end of the arc striking portion 121d at one end or on one side of the recess 121c is provided with the bulged portion 121e, one of the starting end and the ending end of the welding portion 124 may be located on the bulged portion 121e at one end or on one side of the recess 121c, and the other of the starting end and the ending end of the welding portion 124 may be located on the arc striking portion 121d at the other end or on the other side of the recess 121c or the first face 121b.

When the two ends or the two sides of the recess 121c are provided with the arc striking portions 121d, and the second ends of the arc striking portions 121d at the two ends or on the two sides of the recess 121c are provided with the bulged portions 121e, one of the starting end and the ending end of the welding portion 124 may be located on the bulged portion 121e at one end or on one side of the recess 121c, and the other of the starting end and the ending end of the welding portion 124 may be located on the bulged portion 121e at the other end or on the other side of the recess 121c.

The second end of the arc striking portion 121d is provided with the bulged portion 121e protruding from the first face 121b, and at least one of the starting end and the ending end of the welding portion 124 is located on the bulged portion 121e, so that the end portions of the welding portion 124 may be led to the bulged portion 121e having a larger thickness, which can further avoid welding defects and also reduce the effect on the airtightness of the battery 1.

In some embodiments, as shown in FIG. 5 and FIG. 6, an extension L of the welding portion 124 on the bulged portion 121e is greater than 2 mm.

The bulged portion 121e includes a first end and a second end opposite to each other, and the second end of the bulged portion 121e is closer to the first face 121b than its first end. The starting end may be at least 2 mm away from the first end of the bulged portion 121e in an extension direction of the welding portion 124 if the starting end of the welding portion 124 is located on the bulged portion 121e. Similarly, the ending end may be at least 2 mm away from the first end of the bulged portion 121e in the extension direction of the welding portion 124 if the ending end of the welding portion 124 is located on the bulged portion 121e.

Setting the extension L of the welding portion 124 on the bulged portion 121e to be greater than 2 mm can effectively ensure that all parts where welding defects may be produced during welding arc striking and/or welding arc extinguishing are left on the thicker bulged portion 121e, which can further avoid the welding defects and also reduce the effect on the airtightness of the battery cell 12.

In claimed embodiments, as shown in Fig. 8, the first end of the arc striking portion 121d and the bottom wall of the recess 121c are in a smooth transition.

The first end of the arc striking portion 121d and the bottom wall of the recess 121c are in a smooth transition, so that there is no clear boundary between the first end of the arc striking portion 121d and the bottom wall of the recess 121c, thus facilitating leading of the welding portion 124 to the arc striking portion 121d or the first face 121b via the bottom wall of the recess 121c.

In some embodiments, as shown in FIG. 7 and FIG. 8, the side of the arc striking portion 121d facing away from the inside of the battery cell 12 is planar or curved.

The side of the arc striking portion 121d facing away from the inside of the battery cell 12 is a slope face of the slope, and the slope face of the slope may be either a planar face inclined from the bottom wall to the first face 121b as shown in FIG. 7 or a curved face inclined from the bottom wall to the first face 121b as shown in FIG. 8.

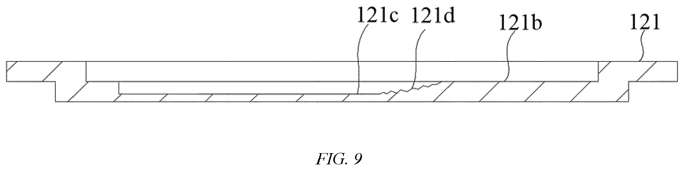

When the side of the arc striking portion 121d facing away from the inside of the battery cell 12 is a curved face, the curved face may be curved only in one direction, or curved in two opposite directions in a wave shape as shown in FIG. 9, as long as the side of the arc striking portion 121d facing away from the inside of the battery cell 12 has a generally upward tendency from the bottom wall to the first face 121b, and each bend is not curved enough to affect leading of the end portion of the welding portion 124 to the arc striking portion 121d or the first face 121b via the recess 121c.

The side of the arc striking portion 121d facing away from the inside of the battery cell 12 may be planar or curved, and is set in a diversified manner. In addition, setting the side of the arc striking portion 121d facing away from the inside of the battery cell 12 to be planar or curved can play a role of arc striking transition.

In some embodiments, as shown in FIG. 5 and FIG. 6, the recess 121c is arc-shaped.

For the cylindrical battery 1, the end cap 121 is circular, and the electrode terminal 121a is connected to a middle area of an end plate. In order to acquire a larger weld mark area, the recess 121c may be set in an arc shape, and the recess 121c may be arranged on the end plate around the electrode terminal 121a.

It should be noted that when the arc striking portions 121d are arranged at the two ends of the recess 121c, the recess 121c may only be arc-shaped, and the two ends of the recess 121c may not communicate with each other. Setting the recess 121c on the end cap 121 into an arc shape can acquire a larger welding area, which facilitates reliable welding of the end cap 121 to the tab 123a.

In some embodiments, as shown in FIG. 5 and FIG. 6, the battery cell 12 includes a plurality of recesses 121c, and the plurality of recesses 121c are arranged at intervals in a circumferential direction of the end cap 121.

The plurality of recesses 121c may have a common surrounding center. For example, the recesses 121c may be arranged around the center of the electrode terminal 121a on the end cap 121.

The first face 121b exists between two adjacent recesses 121c, and an area where each recess 121c is located may be a welding area between the end cap 121 and the tab 123a.

There are a plurality of recesses 121c in the battery cell 12, and the recesses 121c are arranged at intervals in the circumferential direction of the end cap 121, so that the weld mark area of the end cap 121 and the tab 123a can be increased while arc striking transition is achieved, which improves the strength of welding of the end cap 121 to the tab 123a.

It should be pointed out herein that when the arc striking portions 121d are arranged on two sides of the recess 121c, the battery cell 12 may further include a plurality of annular recesses 121c, and the annular recesses 121c are arranged at intervals in a radial direction of the end cap 121.

According to some embodiments of the present application, an embodiment of the present application further provides a battery 1, including a battery cell 12 according to the foregoing embodiments.

According to some embodiments of the present application, an embodiment of the present application further provides a power consuming device, including a battery 1 according to the foregoing embodiments, and the battery 1 is configured to provide electric energy for the power consuming device.

The power consuming device may be any one of the foregoing devices or systems using the battery 1.

According to some embodiments of the present application, referring to FIGS. 5 to 9, the present application provides a battery cell 12, including an end cap 121 and a welding portion 124. The end cap 121 has a first face 121b facing away from the inside of the battery cell 12, the end cap 121 is provided with an arc-shaped recess 121c recessed relative to the first face 121b, and arc striking portions 121d are arranged between two ends of the recess 121c and the first face 121b. The arc striking portion 121d is a slope, the arc striking portion 121d has a first end and a second end opposite to each other, the first end is connected to the recess 121c, the second end is connected to the first face 121b, and the thickness of the first end is less than that of the second end. The welding portion 124 is configured to connect the end cap 121 to a tab 123a of the battery cell 12, a central portion of the welding portion 124 is located in the recess 121c, a starting end of the welding portion 124 is located on the arc striking portion 121d at one end of the recess 121c or the first face 121b, and an ending end of the welding portion 124 is located on the arc striking portion 121d at the other end of the recess 121c or the first face 121b.

In summary, according to the present application, the end portion of the welding portion 124 is arranged on the arc striking portion 121d having a larger thickness or the first face 121b, but not in the recess 121c having a smaller thickness. In this way, the possibility of welding defects produced during welding arc striking and welding arc extinguishing can be reduced. Besides, since welding arc striking and welding arc extinguishing are carried out in a position having a larger thickness, even if welding defects are produced at the positions of welding arc striking and welding arc extinguishing, the airtightness of the battery cell 12 may not be affected, such that the normal operation of the battery cell 12 may not be affected.

Those skilled in the art should understand that, although some of the embodiments herein include some but not other features included in other embodiments, the combination of the features of different embodiments means being within the scope of the present application and forms different embodiments. For example, in the claims, any one of the claimed embodiments may be used in any combination.

In conclusion, the above embodiments are merely used for illustrating rather than limiting the technical solutions of the present application. Although the present application has been illustrated in detail with reference to the foregoing embodiments, it should be understood by those of ordinary skill in the art that modifications can still be made to the technical solutions described in the foregoing embodiments within the scope of protection as defined in the appended claims.

## Claims

1. A battery cell (12), comprising:
an end cap (121), having a first face (121b) facing away from the inside of the battery cell (12), the end cap (121) being provided with a recess (121c) recessed relative to the first face (121b), and an arc striking portion (121d) being arranged between a bottom wall of the recess (121c) and the first face (121b),
wherein the arc striking portion (121d) is a slope, the arc striking portion (121d) has a first end and a second end opposite to each other, the first end is connected to the bottom wall of the recess (121c), the second end is connected to the first face (121b), and the thickness of the first end is less than that of the second end; and
the battery cell (12) further comprises a welding portion (124), the welding portion (124) being configured to connect the end cap (121) to a tab (123a) of the battery cell (12), a central portion of the welding portion (124) being located on the bottom wall of the recess (121c), and an end portion of the welding portion (124) being located on the arc striking portion (121d) or the first face (121b);
the second end of the arc striking portion (121d) is provided with a bulged portion (121e), the bulged portion (121e) protrudes from the first face (121b), and at least one of a starting end and an ending end of the welding portion (124) is located on the bulged portion (121e).

2. The battery cell (12) according to claim 1, wherein the end cap (121) has a smaller thickness at the bottom wall of the recess (121c) than at the arc striking portion (121d) and at the first face (121b) in a thickness direction.

3. The battery cell (12) according to claim 1, wherein an angle of inclination of the slope relative to the bottom wall of the recess (121c) is greater than or equal to 15 degrees and less than or equal to 45 degrees.

4. The battery cell (12) according to claim 1, wherein the height of the slope is greater than or equal to 0.4 mm in a thickness direction of the end cap (121).

5. The battery cell (12) according to claim 1, wherein two ends of the recess (121c) are provided with the arc striking portions (121d), a starting end of the welding portion (124) is located on the arc striking portion (121d) at one end of the recess (121c) or the first face (121b), and an ending end of the welding portion (124) is located on the arc striking portion (121d) at the other end of the recess (121c) or the first face (121b).

6. The battery cell (12) according to claim 1, wherein the bulged portion (121e) is a part of the second end of the arc striking portion (121d) extending towards and above the first face (121b);
or
wherein the bulged portion (121e) is farther away from the tab (123a) than the first face (121b) in a thickness direction of the end cap (121).

7. The battery cell (12) according to claim 1, wherein an extension (L) of the welding portion (124) on the bulged portion (121e) is greater than 2 mm.

8. The battery cell (12) according to any one of claims 1-7, wherein the first end and the bottom wall of the recess (121c) are in a smooth transition.

9. The battery cell (12) according to any one of claims 1-7, wherein the side of the arc striking portion (121d) facing away from the inside of the battery cell (12) is planar or curved;
or
wherein the recess (121c) is arc-shaped.

10. The battery cell (12) according to any one of claims 1-7, wherein the battery cell (12) comprises a plurality of recesses (121c), the plurality of recesses (121c) being arranged at intervals in a circumferential direction of the end cap (121).

11. The battery cell (12) according to claim 10, wherein the plurality of recesses (121c) have a common surrounding center.

12. The battery cell (12) according to any one of claims 1-7, wherein the battery cell (12) comprises a plurality of annular recesses (121c) when the arc striking portions (121d) are arranged on two sides of the recess (121c), the plurality of annular recesses (121c) being arranged at intervals in a radial direction of the end cap (121).

13. A battery (1), comprising a battery cell (12) of claims 1-12.

14. A power consuming device, comprising a battery (1) of claim 13, the battery (1) being configured to supply electric energy.

## Patentansprüche

1. Batteriezelle (12), umfassend:
eine Endkappe (121) mit einer von der Innenseite der Batteriezelle (12) abgewandten ersten Fläche (121b), wobei die Endkappe (121) mit einer relativ zu der ersten Fläche (121b) ausgesparten Aussparung (121c) versehen ist, und einem Bogenzündungsabschnitt (121d), der zwischen einer Bodenwand der Aussparung (121c) und der ersten Fläche (121b) angeordnet ist,
wobei der Bogenzündungsabschnitt (121d) eine schräge Fläche ist, der Bogenzündungsabschnitt (121d) ein erstes Ende und ein zweites Ende, die einander gegenüberliegen, aufweist, das erste Ende mit der Bodenwand der Aussparung (121c) verbunden ist, das zweite Ende mit der ersten Fläche (121b) verbunden ist und die Dicke des ersten Endes geringer als diejenige des zweiten Endes ist; und
die Batteriezelle (12) ferner einen Schweißabschnitt (124) umfasst, wobei der Schweißabschnitt (124) dazu ausgebildet ist, die Endkappe (121) mit einer Lasche (123a) der Batteriezelle (12) zu verbinden, wobei sich ein mittlerer Abschnitt des Schweißabschnitts (124) auf der Bodenwand der Aussparung (121c) und ein Endabschnitt des Schweißabschnitts (124) auf dem Bogenzündungsabschnitt (121d) oder der ersten Fläche (121b) befindet;
das zweite Ende des Bogenzündungsabschnitts (121d) mit einem hervortretenden Abschnitt (121e) versehen ist, der hervortretende Abschnitt (121e) von der ersten Fläche (121b) vorsteht und sich mindestens eines von einem Anfangsende und einem Abschlussende des Schweißabschnitts (124) auf dem hervortretenden Abschnitt (121e) befindet.

2. Batteriezelle (12) nach Anspruch 1, wobei die Endkappe (121) an der Bodenwand der Aussparung (121c) eine geringere Dicke als an dem Bogenzündungsabschnitt (121d) und an der ersten Fläche (121b) in einer Dickenrichtung aufweist.

3. Batteriezelle (12) nach Anspruch 1, wobei ein Neigungswinkel der schrägen Fläche relativ zu der Bodenwand der Aussparung (121c) größer als oder gleich 15 Grad und kleiner als oder gleich 45 Grad ist.

4. Batteriezelle (12) nach Anspruch 1, wobei die Höhe der schrägen Fläche größer als oder gleich 0,4 mm in einer Dickenrichtung der Endkappe (121) ist.

5. Batteriezelle (12) nach Anspruch 1, wobei zwei Enden der Aussparung (121c) mit den Bogenzündungsabschnitten (121d) versehen sind, wobei sich ein Anfangsende des Schweißabschnitts (124) auf dem Bogenzündungsabschnitt (121d) an einem Ende der Aussparung (121c) oder der ersten Fläche (121b) befindet und sich ein Abschlussende des Schweißabschnitts (124) auf dem Bogenzündungsabschnitt (121d) an dem anderen Ende der Aussparung (121c) oder der ersten Fläche (121b) befindet.

6. Batteriezelle (12) nach Anspruch 1, wobei der hervortretende Abschnitt (121e) ein Teil des zweiten Endes des Bogenzündungsabschnitts (121d) ist, der sich in Richtung und über der ersten Fläche (121b) erstreckt;
oder
wobei der hervortretende Abschnitt (121e) weiter von der Lasche (123a) entfernt ist als die erste Fläche (121b) in einer Dickenrichtung der Endkappe (121).

7. Batteriezelle (12) nach Anspruch 1, wobei eine Erstreckung (L) des Schweißabschnitts (124) auf dem hervortretenden Abschnitt (121e) größer als 2 mm ist.

8. Batteriezelle (12) nach einem der Ansprüche 1-7, wobei das erste Ende und die Bodenwand der Aussparung (121c) in einem nahtlosen Übergang sind.

9. Batteriezelle (12) nach einem der Ansprüche 1-7, wobei die von der Innenseite der Batteriezelle (12) abgewandte Seite des Bogenzündungsabschnitts (121d) eben oder gekrümmt ist;
oder
wobei die Aussparung (121c) bogenförmig ist.

10. Batteriezelle (12) nach einem der Ansprüche 1-7, wobei die Batteriezelle (12) eine Vielzahl von Aussparungen (121c) umfasst, wobei die Vielzahl von Aussparungen (121c) in Abständen in einer Umfangsrichtung der Endkappe (121) angeordnet ist.

11. Batteriezelle (12) nach Anspruch 10, wobei die Vielzahl von Aussparungen (121c) einen gemeinsamen umgebenden Mittelpunkt aufweist.

12. Batteriezelle (12) nach einem der Ansprüche 1-7, wobei die Batteriezelle (12) eine Vielzahl ringförmiger Aussparungen (121c) umfasst, wenn die Bogenzündungsabschnitte (121d) auf zwei Seiten der Aussparung (121c) angeordnet sind, wobei die Vielzahl ringförmiger Aussparungen (121c) in Abständen in einer radialen Richtung der Endkappe (121) angeordnet ist.

13. Batterie (1), umfassend eine Batteriezelle (12) nach den Ansprüchen 1-12.

14. Leistungsverbrauchsvorrichtung, umfassend eine Batterie (1) nach Anspruch 13, wobei die Batterie (1) dazu ausgebildet ist, elektrische Energie zuzuführen.

## Revendications

1. Élément de batterie (12), comprenant :
un capuchon d'extrémité (121), ayant une première face (121b) orientée à l'écart par rapport à l'intérieur de l'élément de batterie (12), le capuchon d'extrémité (121) étant pourvu d'un retrait (121c) en retrait relativement à la première face (121b), et une portion d'amorçage d'arc (121d) étant agencée entre une paroi inférieure du retrait (121c) et la première face (121b),
dans lequel la portion d'amorçage d'arc (121d) est une pente, la portion d'amorçage d'arc (121d) a une première extrémité et une seconde extrémité opposées l'une à l'autre, la première extrémité est reliée à la paroi inférieure du retrait (121c), la seconde extrémité est reliée à la première face (121b), et l'épaisseur de la première extrémité est inférieure à celle de la seconde extrémité ; et
l'élément de batterie (12) comprend en outre une portion de soudage (124), la portion de soudage (124) étant configurée pour relier le capuchon d'extrémité (121) à une languette (123a) de l'élément de batterie (12), une portion centrale de la portion de soudage (124) étant située sur la paroi inférieure du retrait (121c), et une portion d'extrémité de la portion de soudage (124) étant située sur la portion d'amorçage d'arc (121d) ou la première face (121b) ;
la seconde extrémité de la portion d'amorçage d'arc (121d) est pourvue d'une portion bombée (121e), la portion bombée (121e) faisant saillie à partir de la première face (121b), et au moins une extrémité parmi une extrémité de départ et une extrémité de fin de la portion de soudage (124) est située sur la portion bombée (121e).

2. Élément de batterie (12) selon la revendication 1, dans lequel le capuchon d'extrémité (121) a une épaisseur plus petite au niveau de la paroi inférieure du retrait (121c) qu'au niveau de la portion d'amorçage d'arc (121d) et au niveau de la première face (121b) dans une direction d'épaisseur.

3. Élément de batterie (12) selon la revendication 1, dans lequel un angle d'inclinaison de la pente relativement à la paroi inférieure du retrait (121c) est supérieur ou égal à 15 degrés et inférieur ou égal à 45 degrés.

4. Élément de batterie (12) selon la revendication 1, dans lequel la hauteur de la pente est supérieure ou égale à 0,4 mm dans une direction d'épaisseur du capuchon d'extrémité (121).

5. Élément de batterie (12) selon la revendication 1, dans lequel deux extrémités du retrait (121c) sont pourvues des portions d'amorçage d'arc (121d), une extrémité de départ de la portion de soudage (124) est située sur la portion d'amorçage d'arc (121d) au niveau d'une extrémité du retrait (121c) ou de la première face (121b), et une extrémité de la portion de soudage (124) est située sur la portion d'amorçage d'arc (121d) au niveau de l'autre extrémité du retrait (121c) ou de la première face (121b).

6. Élément de batterie (12) selon la revendication 1, dans lequel la portion bombée (121e) est une partie de la seconde extrémité de la portion d'amorçage d'arc (121d) s'étendant vers et au-dessus de la première face (121b) ;
ou
dans lequel la portion bombée (121e) est plus éloignée de la languette (123a) que la première face (121b) dans la direction d'épaisseur du capuchon d'extrémité (121).

7. Élément de batterie (12) selon la revendication 1, dans lequel une extension (l) de la portion de soudage (124) sur la portion bombée (121e) est supérieure à 2 mm.

8. Élément de batterie (12) selon l'une quelconque des revendications 1 à 7, dans lequel la première extrémité et la paroi inférieure du retrait (121c) sont dans une transition lisse.

9. Élément de batterie (12) selon l'une quelconque des revendications 1 à 7, dans lequel le côté de la portion d'amorçage d'arc (121d) orienté à l'écart de l'intérieur de l'élément de batterie (12) est plan ou courbe ;
ou
dans lequel le retrait (121c) est en forme d'arc.

10. Élément de batterie (12) selon l'une quelconque des revendications 1 à 7, l'élément de batterie (12) comprenant une pluralité de retraits (121c), la pluralité de retraits (121c) étant agencée à intervalles dans une direction circonférentielle du capuchon d'extrémité (121).

11. Élément de batterie (12) selon la revendication 10, dans lequel la pluralité de retraits (121c) a un centre environnant commun.

12. Élément de batterie (12) selon l'une quelconque des revendications 1 à 7, l'élément de batterie (12) comprenant une pluralité de retraits annulaires (121c) lorsque les portions d'amorçage d'arc (121d) sont agencées sur deux côtés du retrait (121c), la pluralité de retraits annulaires (121c) étant agencée à intervalles dans une direction radiale du capuchon d'extrémité (121).

13. Batterie (1), comprenant un élément de batterie (12) selon les revendications 1 à 12.

14. Dispositif consommateur d'énergie, comprenant une batterie (1) selon la revendication 13, la batterie (1) étant configurée pour fournir de l'énergie électrique.
